# EUROPÄISCHE PATENTSCHRIFT

(11) **EP 1 923 202 B1**
(45) Veröffentlichungstag und Bekanntmachung des Hinweises auf die Patenterteilung: **21.01.2009**
(21) Anmeldenummer: 06023956.3
(22) Anmeldetag: 17.11.2006
(51) Int. Cl.: B29C 65/10, B65B 51/20

(54) **Verfahren und Vorrichtung zum Herstellen eines Schlauchbeutels**
Process and apparatus for producing a tubular bag
Procédé et dispositif pour produire un sac tubulaire

(43) Veröffentlichungstag der Anmeldung: 21.05.2008
(73) Patentinhaber: TEEPACK SPEZIALMASCHINEN GMBH & CO. KG, D-40667 Meerbusch (DE)
(72) Erfinder: Lambertz Stefan, Dr., 50354 Hürth (DE)
(74) Vertreter: Grünecker, Kinkeldey, Stockmair & Schwanhäusser Anwaltssozietät

(56) Entgegenhaltungen:
- WO-A-02/16208
- DE-A1- 1 461 907
- DE-A1- 4 203 798
- DE-A1- 19 508 155

## Beschreibung

Die vorliegende Erfindung betrifft ein Verfahren zum Herstellen eines Schlauchbeutels, bei dem eine Folienbahn umgelegt und die umgelegte Folienbahn durch eine Längssiegeleinrichtung zu einem Folienschlauch gesiegelt wird, dessen Folienmaterial im Bereich der Kanten des herzustellenden Schlauchbeutels gespreizt und mehrlagig gegeneinander gelegt und gesiegelt wird. Die vorliegende Erfindung betrifft ferner eine Vorrichtung zur Durchführung des Verfahrens.

Die gattungsgemäßen Verfahren werden regelmäßig als s.g. "form-fill-seal-Vertahren" bezeichnet. Vertreter dieser Verfahren sind offenbart in der DE-A-1 113 174, der DE-A-42 03 798, der EP-B-0 627 355 sowie der DE-A-199 57 891.

Bei dem gattungsgemäßen Verfahren wird zunächst eine ebene Folienbahn von einem Folienvorrat, beispielsweise einer Folienrolle abgewickelt und über einer Formschulter umgelegt, so dass die zunächst ebene Folienbahn zu einem umfänglich umschlossenen Folienschlauch geformt wird, der üblicherweise durch eine Längsschweißnaht versiegelt wird. Neben dem hier ausdrücklich genannten Verschweißen beinhaltet das Siegeln in Sinne der vorliegenden Erfindung jede Art der Verbindung von wenigstens zwei Folienbahnen. Die Versiegelung kann insbesondere durch Aufschmelzen einer auf das Folienmaterial aufgebrachten Schweißschicht erzeugt werden. Als Alternative ist auch das Verkleben der Folienbahnen denkbar.

Üblicherweise wird die Längsschweißnaht gegen eine Gegenfläche erzeugt, die durch ein Füllrohr gebildet ist, welches von dem Folienmaterial umgeben ist und der Befüllung des herzustellenden Schlauchbeutels dient. Dieser wird vor dem Befüllen und nach dem Ausbilden der Längsschweißnaht üblicherweise unterseitig durch eine Quersiegeleinrichtung verschlossen. Im Hinblick auf relative kurze Taktzeiten hat sich das Verschweißen, beispielsweise das Ultraschallschweißen des Folienmaterials durchgesetzt. Die Querschweißeinrichtung hat üblicherweise zwei relativ zueinander beabstandete Schweißbackenpaare, zwischen denen ein Schneidmesser angeordnet ist. So kann beim Verschließen des Folienschlauches zur Ausbildung eines Schlauchbeutels der in Zuführrichtung der Folienbahn dahinter liegende, bereits gefüllte Schlauchbeutel zeitgleich verschlossen und von dem zugeführten Endlosmaterial abgetrennt werden. Das Befüllen und Schließen des Schlauchbeutels kann aber auch nach dem Abtrennen des jedenfalls unterseitig verschlossenen Schlauchbeutels erfolgen, sofern dies gewünscht ist.

Schlauchbeutel der eingangs genannten Art bestehen üblicherweise aus einer Kunststofffolie, die mit Rücksicht auf die Materialkosten eine relativ geringe Stärke hat. Dementsprechend sind die Schlauchbeutel für sich nicht sehr standsicher und formstabil. Abhängig von den Schütteigenschaften des in dem Schlauchbeutel aufgenommenen Schüttgutes können sich die Seitenwände der Beutel ausbeulen. Im Hinblick auf eine platzsparende Lagerung und einen platzsparenden Transport der gefüllten Schlauchbeutel werden aber regelmäßig Schlauchbeutel mit rechteckiger Querschnittsfläche als vorteilhaft angesehen. Im Hinblick darauf ist es aus dem vorerwähnten Stand der Technik bekannt, im Bereich der Kanten der herzustellenden Schlauchbeutel eine Verstärkung vorzusehen, welche wesentlich dazu beiträgt, die gewünschte Grundfläche des Schlauchbeutels auch im gefüllten Zustand beizubehalten. Die vorerwähnte Rechtecksfläche ist lediglich eine bevorzugte Ausgestaltung und es ist ebenso denkbar, den Beutel mit einer anderen vieleckigen Grundfläche auszubilden. Zur Verstärkung der Kanten wird üblicherweise das den Schlauchbeutel bildende Folienmaterial gespreizt, d.h. aus der Ebene benachbarter Seitenwände des Beutels im Bereich der Beutelkante herausgeführt, und das Material selbst gegeneinander gelegt und gegeneinander gesiegelt. Wenngleich nicht zweckmäßig kann im Bereich der Kanten auch ein weiterer Folienstreifen an das Folienmaterial des Schlauchbeutels angelegt und mit diesem versiegelt werden. Jedenfalls im Bereich der Siegelnaht ergibt sich hierbei ein mehrlagiger Aufbau an Folienmaterial.

Die zur Verstärkung der Kanten mehrlagig vorgesehenen Folienabschnitte werden regelmäßig durch Verschweißen miteinander versiegelt. Hierbei besteht zum einen die Möglichkeit, das zu siegelnde Folienmaterial zwischen Schweißbacken zu klemmen, die entweder konstant auf einer hinreichenden Temperatur gehalten werden, oder als Sonotrode und Amboss einer Ultraschallschweißeinrichtung ausgebildet sind. Bei dieser Fallgestaltung werden die zu verschweißenden Folienlagen unmittelbar von der Kantenschweißeinrichtung von den zyklisch auf- und zufahrenden Schweißbacken kontaktiert. Eine solche Verfahrensführung geht aber regelmäßig einher mit einem diskontinuierlichen Vorschub der herzustellenden Schlauchbeutel. Diese werden in der Kantenschweißeinrichtung ortsfest gehalten. Dementsprechend laufen auch die vor- und nachgelagerten Herstellungsschritte zum Bilden des Folienschlauches, zum Absiegeln der Quersiegelnaht und zum Trennen des Schlauchbeutels getaktet ab.

Das getaktete Arbeiten ist aber energetisch nachteilig. Die Vorrichtung und Vorrichtungsteile müssen jeweils beschleunigt und abgebremst werden, was auch einen erhöhten Verschleiß der Vorrichtungsteile mit sich bringt.

Bei der Durchführung des Verfahrens ist ferner grundsätzlich darauf zu achten, dass das verarbeitete Folienmaterial nicht übermäßig erwärmt wird. Dieses wird durch Recken auf die erforderliche Stärke gezogen, was zur Folge hat, dass bei einer übermäßigen Erwärmung des Folienmaterials eingefrorene Orientierungen der Folie zurückgestellt werden, wodurch die Folie schrumpft und unbrauchbar wird.

Der vorliegenden Erfindung liegt das Problem zugrunde, ein Verfahren der eingangs genannten Art anzugeben, welches die oben diskutierten Nachteile nicht hat. Insbesondere soll mit der vorliegenden Erfindung ein Verfahren angegeben werden, mit dem eine Folienbahn unter bestmöglicher Ausnutzung von Energie zu Schlauchbeuteln mit versteiften Kanten herstellbar ist. Die vorliegende Erfindung will ferner eine Vorrichtung zur Durchführung des Verfahrens angeben.

Zur verfahrensmäßigen Lösung wird mit der vorliegenden Erfindung ein Verfahren mit den Merkmalen von Anspruch 1 angegeben. Bei diesem wird das Folienmaterial beim Siegeln der Kanten bewegt. Im Gegensatz zu den diskontinuierlichen, vorbekannten Verfahren erfolgt das Versiegeln der Kanten bei dem erfindungsgemäßen Verfahren vorzugsweise kontinuierlich, also mit kontinuierlicher Vorschubgeschwindigkeit des Folienmaterials in der Vorrichtung. Dabei besteht die Möglichkeit, eine an dem Folienmaterial zum Verschweißen im Bereich der Kanten anliegende Kantensiegeleinrichtung während des Siegelns mit dem Folienmaterial mit zu bewegen und diese nach erfolgter Siegelung von dem Folienmaterial zu lösen und entgegen der Vorschubrichtung des Folienmaterials zurückzufahren, um an den nächsten Kantenabschnitt angelegt zu werden. Das Folienmaterial wird kontinuierlich bewegt.

Selbst diese zyklischen Bewegungen des Vorrichtungsteils der Vorrichtung zur Herstellung des Schlauchbeutels werden aber gemäß einer bevorzugten Weiterbildung vermieden, bei der die Lagen des Folienmaterials beim Siegeln der Kanten berührungsfrei gegeneinander gedrückt werden. Bei dieser Verfahrensführung muss die Kantensiegeleinrichtung nicht zwangsläufig mit dem Folienmaterial mitgeführt werden. Die Kantensiegeleinrichtung kann auch ortsfest angeordnet sein. Insbesondere erfolgt das Andrücken der gegeneinander zu legenden Lagen des Schlauchbeutels über ein Gaskissen, vorzugsweise ein Luftkissen, welches in einem Spalt von zwei gegenüber liegenden Backen unter Zwischenlage des mehrlagig durchlaufenden Folienmaterials ausgebildet wird. Der Begriff "drücken" kann hierbei nicht so verstanden werden, dass von außen eine das Folienmaterial kontaktierende Druckkraft aufgebracht wird. Vielmehr wird die Druckkraft berührungsfrei angelegt. Dabei wird aber eine hinreichende Anpresskraft erzeugt, durch welche wenigstens zwei Folienlagen beim Siegeln flächig und sicher gegeneinander gelegt werden, um beim Aufschmelzen und Erstarren der Siegelschicht zuverlässig miteinander zu verschweißen. Das Gaskissen wird insbesondere durch Einstellen eines die zu siegelnde Kante aufnehmenden Spaltes so eingestellt, dass der Gasdruck die zu siegelnden Lagen berührungsfrei gegeneinander drückt. Das Gaskissen kann im wesentlichen der Temperierung und d.h. Erwärmung und/oder Abkühlung des Folienmaterials im Bereich des Spaltes dienen. In letzt genannten Fall ist dem Spalt eine Heizvorrichtung zum Erwärmen des Folienmaterials insbesondere im Bereich der Kanten vorgelagert.

Eine zu bevorzugende Heizvorrichtung kann eine berührungsfrei das mehrlagige Folienmaterial im Bereiche der Kanten erwärmende Heizvorrichtung sein, beispielsweise eine Heizvorrichtung, welche das Folienmaterial im Bereich der Kanten konvektiv und/oder durch Wärmestrahlung berührungsfrei erwärmt.

Im Hinblick auf eine möglichst zielgerichtete lokale Erwärmung des Folienmaterials im Bereich der Kanten ist eine Erwärmung teilweise oder überwiegend durch Wärmestrahlung zu bevorzugen. Bei einer relativ diffusen Erwärmung durch Heizluft besteht das Problem, dass auch andere Bereiche der bereits hergestellten Schlauchfolie in unzulässiger Weise erwärmt werden. Hierbei ist zu beachten, dass der Schlauchbeutel im Bereich der Kanten wegen der Mehrlagigkeit des Folienmaterials weniger anfällig gegenüber Erwärmung ist, als an den einlagig vorliegenden Seitenwänden.

Gemäß einer weiteren bevorzugten Ausgestaltung der vorliegenden Erfindung wird indes vorgeschlagen, das Gaskissen durch ein erwärmtes Gas auszubilden. Die Temperatur des erwärmten Gases ist so gewählt, dass die zum Verschweißen der mehrlagig gegeneinander liegenden Lagen des Folienmaterials erforderliche Wärme im Bereich des Spaltes eingebracht wird. Das durch erwärmtes Gas gebildete Gaskissen dient danach sowohl dem Anlegen der Lagen des Folienmaterials als auch zum Erwärmen derselben und kann für sich allein die Verschweißung dieser Lagen im Bereich der Kanten bewirken.

Bei einer geeigneten Verfahrensführung, die insbesondere im Hinblick auf die Regelungscharakteristik ein schnelles Anfahren der Kantenschweißeinrichtung ermöglicht, wird das Folienmaterial zum Siegeln einer Kante sowohl durch Wärmestrahlung als auch konvektiv derart erwärmt, dass die Lagen des Folienmaterials miteinander verschweißt werden. Dabei kann eine die Backen erwärmende Heizvorrichtung derart gesteuert werden, dass die Backen selbst aufgrund ihrer Temperatur eine zum Aufschmelzen und Aufschweißen des mehrlagigen Folienmaterials nahezu ausreichende Wärme erzeugen. Die zum Verschweißen tatsächlich benötigte Wärmemenge wird aber erst dann erreicht, wenn ein weiterer Wärmeanteil in den jeweiligen Kantenbereich konvektiv eingebracht wird. Das Aus- und Anschalten eines entsprechenden Gasstromes ermöglicht dementsprechend ein schnelles Aufheizen des Folienmaterials auf die erforderliche Schweißtemperatur. Beim Stillstand der Anlage wird die konvektive Wärmezufuhr abgeschaltet, um ein unzulässiges Erwärmen des stillstehenden Folienmaterials zu verhindern. Es hat sich als zweckmäßig erwiesen, die durch Wärmestrahlung eingebrachte Wärmemenge mit 30% bis 70%, vorzugsweise mit 45% bis 65% bezogen auf die insgesamt zum Verschweißen der Kante erforderliche Gesamtwärmemenge festzulegen.

Die weiterhin bevorzugte Verfahrensführung, bei der das Folienmaterial konvektiv durch Luft erwärmt wird, welche durch in der Backe ausgebildete Kanäle geführt wird, ermöglicht einen relativ kompakten Aufbau, was insbesondere bei der Herstellung von relativ kleinen Schlauchbeuteln zu bevorzugen ist. Die die Wärme konvektiv in das Folienmaterial im Bereich der Kante aufbringenden Backen dienen gleichzeitig der Erwärmung der Luft zur konvektiven Erwärmung des Folienmaterials. Vorzugsweise wird der foliennahe Backenbereich separat zu einem tiefer liegenden Backenbereich, d.h. einem Bereich der jeweiligen Backe temperiert, der weiter von der foliennahen Oberfläche der Backe entfernt liegt, als der foliennahe Backenbereich. Die Temperierung der Backen in unterschiedlichen Zonen erfolgt mit dem Ziel, in einer Ruhestellung, in der die Backe von dem Folienmaterial beabstandet ist und welche üblicherweise eingestellt wird, wenn das Folienmaterial in der Vorrichtung zur Herstellung des Schlauchbeutels zum Stillstand gekommen ist, eine übermäßige Erwärmung des Folienmaterials im Bereich der Kante allein durch Wärmestrahlung zu verhindern. Zum einen wird der Strahlungsanteil mit zunehmender Distanz zwischen Backe und Folienmaterial vermindert. Zum anderen wird aber auch die Temperatur der Backe und damit die von der Backe abgegebene Strahlungswärme unmittelbar benachbart zu dem Folienmaterial abesenkt. Lediglich die Kerntemperatur der Backe bleibt im wesentlichen unverändert, was den Vorteil mit sich bringt, dass durch die Backe hindurch geführte Luft im Kernbereich der Backe erwärmt wird. Nach Beendigung des Stillstandes der Vorrichtung und Einschalten des Luftdruckes für das Luftkissen kann danach rasch die zum Verschweißen der Kante erforderliche Wärmemenge bereitgestellt werden.

Zur Vermeidung von Bedienungsfehlern werden die Backen vorzugsweise automatisch in Ruhestellung verfahren, wenn ein Stillstand des Folienmaterials im Bereich der Backen detektiert wird. Dabei ist es nicht zwingend erforderlich, beide zwischen sich einen Spalt für ein Gaskissen einschließende Backen in Bezug auf das Folienmaterial in die Ruhestellung zu verfahren. Vielmehr geht die Erfindung vorzugsweise davon aus, dass eine der paarweise vorgesehenen Backen, die einen Gegenhalter bildet und weniger zur Erwärmung des mehrlagigen Folienmaterials im Bereich der Kante beiträgt, als die gegenüberliegende Backe, ortsfest verbleibt.

Der Gegenhalter wird vorzugsweise über ein konstant temperiertes Gas erwärmt, das über Gasauslassdüsen an der foliennahen Vorderseite des Gegenhalter ein Gaskissen erzeugt. Die Temperatur des Gases ist dabei so gewählt, dass der Gegenhalter auf einer Temperatur gehalten wird, die unterhalb der Siegeltemperatur des Folienmaterials liegt.

Beim Stillstand der Maschine, d.h. in der Ruhestellung der Backe, wird diese Temperierung beibehalten, so dass die Vorrichtung rasch angefahren werden kann. Im Betrieb wird der Gegenhalter durch das erwärmte Gas tatsächlich gekühlt, und zwar vor einer unzulässigen Erwärmung, die sich dadurch ergibt, dass die von der dem Gegenhalter gegenüber liegenden Backe in den Spalt eingetragene Wärme den Gegenhalter übermäßig erwärmt. Ziel der Verfahrensführung sollte sein, den Gegenhalter zu jeder Zeit auf einer Temperatur unterhalb des Schmelzpunktes der Siegelbeschichtung, d.h. der Siegeltemperatur des Folienmaterials zu halten. Praktische Versuche haben gezeigt, dass die Temperatur des Gegenhalters bei etwa 80 bis 90% der Siegeltemperatur in Grad Celsius liegen sollten.

Das Zustellen der wenigstens einen, jeweils paarweise je Kante vorgesehenen Backe erfolgt vorzugsweise durch einen pneumatischen Zylinder. Dieser dient aber nicht nur der Zustellung der Backe, sondern wird vorzugsweise so betrieben, dass er die wenigstens eine Backe beim Betrieb in einer Gleichgewichtsstellung hält. Diese Gleichgewichtsstellung resultiert aus einem Kräftegleichgewicht zwischen der in dem pneumatischen Zylinder wirkenden Druckkraft und der durch das Luftpolster gegen die Backe wirkenden Druckkraft. Mit anderen Worten kann über die in dem pneumatischen Zylinder wirkende Druckkraft die Druckkraft in dem Spalt selbstregelnd eingestellt werden, die gegen das Folienmaterial wirkt.

Im Hinblick auf eine möglichst einfache Ausgestaltung ist es zu bevorzugen, lediglich eine der jeweils paarweise vorgesehenen Backen über einen derartigen pneumatischen Zylinder abzustützen und "schwimmend" zu lagern, wohingegen die andere Backe, die üblicherweise durch den Gegenhalter gebildet wird, nicht schwimmend, d.h. ortsfest gehalten ist. Wegen des Kräftegleichgewichts auf beiden Seiten des im Bereich der Kante doppellagig liegenden Folienmaterials stellt sich üblicherweise auf beiden Seiten des Folienmaterials die gleiche Anpresskraft ein; bei gleichem Betriebsdruck der Druckquellen für die Backe und den Gegenhalter üblicherweise auch ein gleicher Abstand zwischen der foliennahen Vorderseite der Backe und dem Folienmaterial.

Es hat sich gezeigt, dass der Spalt, d.h. der lichte Abstand zwischen paarweise vorgesehenen und einander gegenüber liegenden Backen in etwa der Stärke des Folienmaterials entsprechen kann. Die Spaltbreite sollte die dreifache Stärke des mehrlagig liegenden Folienmaterials im Bereicht der Kante jedoch nicht überschreiten, da ansonsten eine hinzureichende Abstandskontrolle und Druckbeaufschlagung auf das Folienmaterial schwierig wird, da das Ausbilden eines gleichmäßigen Gaskissens begünstigt.

Zur Vermeidung von Bedienungsfehlern wird ferner vorzugsweise die Zufuhr von Gas automatisch abgestellt, wenn ein Stillstand des Folienmaterials im Bereich der Backen detektiert wird. Eine solche Verfahrensführung kann auch in Abhängigkeit von der Zustellbewegung der Backen erfolgen, beispielsweise über einen Endschalter, der zwangsläufig betätigt wird, wenn die Backe die Ruhestellung erreicht.

Zur vorrichtungsmäßigen Lösung wird mit der vorliegenden Erfindung ein Andrückmittel zum Anlegen des im Bereich der gespreizten Kanten mehrlagig liegenden Folienmaterials vorgeschlagen, welches das Folienmaterial im Bereich der jeweiligen Kante berührungsfrei gegeneinander drückt. Da die Vorrichtung üblicherweise mehrere Kantensiegeleinrichtungen zur Herstellung mehrerer Kanten am Umfang des Folienschlauches hat, sind üblicherweise mehrere Andrückmittel an der Vorrichtung zur Herstellung des Schlauchbeutels vorgesehen.

Weitere bevorzugte Weiterbildungen der vorliegenden Erfindung sind in den abhängigen Verfahrensansprüchen 11 ff angegeben.

Die vorliegende Erfindung wird nachfolgend unter Bezugnahme auf ein Ausführungsbeispiel in Verbindung mit der Zeichnung näher erläutert. In dieser zeigen:
Fig. 1 eine perspektivische Ansicht eines Ausführungsbeispiels eines Moduls zur Kantensiegelung;
Fig. 2 eine Schnittansicht durch ein Siegelbacke des in Fig. 1 gezeigten Ausführungsbeispiels;
Fig. 3 eine Stirnseitenansicht des in Fig. 2 gezeigten Ausführungsbeispiels;
Fig. 4 eine Schnittansicht durch das Kantensiegelungsmodul einer Vorrichtung zur Herstellung von Schlauchbeuteln und
Fig. 5 die in Fig. 5 eingezeichnete Einzelheit V in vergrößerter Darstellung.

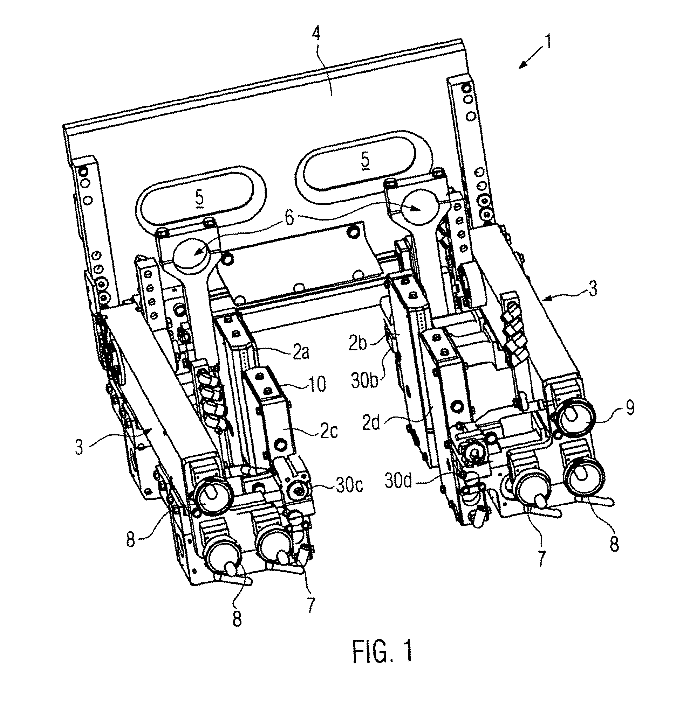

Da in Fig. 1 gezeigte Kantensiegelungsmodul 1 ist als Teil einer Vorrichtung zum Herstellen von Schlauchbeuteln vorgesehen und in Förderrichtung der zugeführten Schlauchfolie in etwa auf Höhe des Füllrohres angeordnet. Dem Kantensiegelungsmodul 1 in Förderrichtung der Folie vorgelagert sind Spreizelemente, die beispielsweise durch an den Kanten des Füllrohres außenseitig vorgesehene Spreizelemente gebildet sein können, wie sie in der DE-A-42 03 798 offenbart sind. Alternativ können auch Spreizelemente zum Einsatz kommen, wie sie in der DE-A-1 113 174 beschrieben sind.

Mit den Spreizelementen werden am Umfang des Folienschlauches an vorbestimmter Stelle, vorzugsweise an den Ecken eines polygonen Füllrohres an dem Folienschlauch mehrlagige Bereiche, üblicherweise zweilagige Zipfel ausgeformt, welche die Seitenwände des Schlauchbeutels überragen. Mit diesen Zipfeln wird die Schlauchfolie in das in Fig. 1 gezeigte Kantensiegelungsmodul eingeführt. Die Spreizelemente enden unmittelbar vor dem Kantensiegelungsmodul.

Bei dem gezeigten Ausführungsbeispiel wird aus einem Folienschlauch ein Schlauchbeutel mit rechteckiger Querschnittsfläche gebildet. Dementsprechend hat der Folienschlauch vor dem Einbringen in das Kantensiegelungsmodul 1 an seinen vier Kanten jeweils einen vorspringenden Zipfel. Diesen vier Zipfeln zugeordnet sind an dem Kantensiegelungsmodul 1 zugeordnete Backen 2 vorgesehen. Den Backen 2 jeweils zugeordnet sind nicht dargestellte Gegenhalter. Diese Gegenhalter sind unmittelbar gegenüberliegend zu den Backen 3 vorgesehen und bilden mit diesen einen Spalt, in welchem der Zipfel geführt und versiegelt wird. Mit anderen Worten befinden sich zwischen den einander gegenüber liegenden Backen 2 in der Darstellung gemäß Fig. 1 jeweils zwei nicht dargestellte Gegenhalter.

Die Gegenhalter sind lösbar an dem Kantensiegelungsmodul 1 angeordnet und können zu Wartungs- und Einstellungszwecken abgenommen werden.

Jeweils zwei Backen 2a, 2b bzw. 2c, 2d sind an jeweils einem Querträger 3 angeordnet, der verschieblich an einer Halteplatte 4 geführt ist. Die Halteplatte 4 hat zwei Langlöcher 5, durch welche nicht dargestellte Betätigungsstangen hindurch greifen, die in Augen 6 befestigt sind und das Aufeinanderzufahren der Querträger 3 bewirken. In Fig. 1 ist eine Position gezeigt, bei welcher die Vorrichtung eingerichtet werden kann, um beispielsweise einen Folienschlauch über ein noch im nachfolgenden näher beschriebenes Füllrohr zu führen.

Zur Einstellung eines Spaltes zwischen den Backen 2 und dem zugeordneten Gegenhalter können die Backen 2 relativ zu den Gegenhaltern bewegt werden. Hierzu sind endseitig des Querträgers 3 jeweils Handräder 7, 8 vorgesehen, die über Spindeln die Relativbewegung der entsprechenden Backen 2a, 2c bzw. 2b, 2d bewirken. Bei dieser Bewegung handelt es sich um eine Bewegung der jeweiligen Backen 2a, 2c bzw. 2b, 2d in Richtung der Längserstreckung des Querträgers 8. Des weiteren ist ein Handrad 9 vorgesehen, durch welches die Backen 8 rechtwinklig zum Querträger verfahren werden können. Eine Betätigung des Handrades 9 verändert dementsprechend den relativen Abstand zwischen den Backen 2a und 2b bzw. 2c und 2d.

Fig. 1 lässt ferner pneumatische Zylinder 30 erkennen, die jeweils die Backen 2a bis 2d abstützen. Über diese pneumatischen Zylinder 30 können die Backen in eine Ruhestellung verfahren werden, d.h. in Längsrichtung des Querträgers 3 von dem Folienmaterial abgezogen werden. Beim Betrieb werden die Backen 2 über dem pneumatischen Zylinder 30 schwimmend gelagert. Mit anderen Worten wird der Zylinder 30 zum Zustellen der Backen 2 nicht in eine Endposition gefahren. Vielmehr ergibt sich die Betriebsstellung der Backen dadurch, dass sich ein Gleichgewichtszustand zwischen dem Innendruck in dem pneumatischen Zylinder 30 respektive der hierdurch bewirkten Druckkraft des pneumatischen Zylinders 30 und einer Gegenkraft ergibt, die aus dem Druck eines Luftkissens zwischen dem Folienmaterial und der Backe resultiert, welches gegen die Backe 2 drückt.

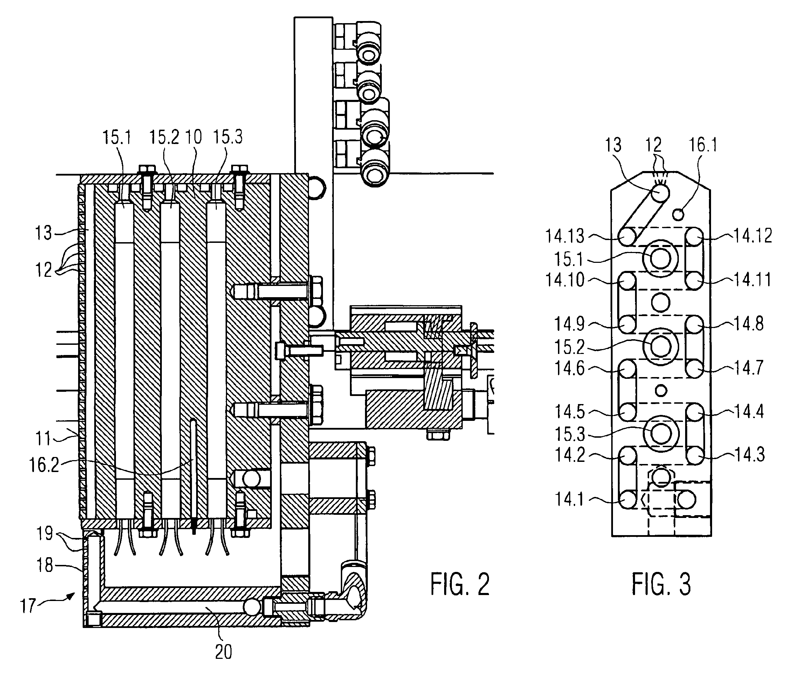

In Fig. 2 ist eine Längsschnittansicht durch eine der Backen 2 dargestellt. Die Backen 2 werden im wesentlichen durch einen Block 10 aus einer CuCrZr3-Legierung gebildet und haben an ihrer foliennahen Oberfläche 11 eine Vielzahl von diese Oberfläche 11 durchsetzenden Luftaustrittsöffnungen 12. Es sind in Längsrichtung zwei parallele Reihen von Luftaustrittsöffnungen 12 vorgesehen, die in Höhenrichtung jeweils versetzt zueinander ausgebildet sind. Die Luftaustrittsöffnungen 12 kommunizieren mit einem Luftverteilerkanal 13, der mit einem mäandrierend in dem Block 10 ausgebildeten Zuleitungssystem 14 in Verbindung steht. Die in dem Block 10 hierzu ausgesparten Bohrungen sind in der Seitenansicht gemäß Fig. 3 zu erkennen. Zu den Luftaustrittsöffnungen 12 geführte Luft wird in dieses Zuleitungssystem 14 durch den ersten Querkanal 14.1 eingebracht wird dort stirnseitig umgelenkt zu dem zweiten Querleitungskanal 14.2, wird an dessen Ende auf die andere Seite zu dem dritten Querleitungskanal 14.3 und von dort zu dem auf gleicher Seite liegenden Querleitungskanal 14.4 geführt usw. Neben den Querleitungskanälen 14.1 bis 14.13 sind in dem Block 10 drei Bohrungen für Heizpatronen 15 sowie zwei Bohrungen 16 für Thermofühler ausgespart. Die luftaustrittsnahe Heizpatrone 15.1 und der entsprechende Thermofühler 16.1 sind über einen eigenständigen Regelkreis geregelt; die beiden anderen Heizpatronen 15.2, 15.3 werden über einen separaten Regelkreis aufgrund der Ist-Informationen des zweiten Thermofühlers 16.2 geregelt. Die Heizpatronen 15 bewirken eine Erwärmung des Blocks 10, so dass dieser an seiner foliennahen Oberfläche 11 das gegenüberliegend angeordnete Folienmaterial des Zipfels durch Wärmestrahlung erwärmt. Darüber hinaus wird die durch das Zuleitungssystem 14 geführte Luft durch den warmen Block 10 erwärmt. Dementsprechend wird üblicherweise kalte Luft in den Block 10 eingeleitet. Die Thermofühler 16.1 und 16.2 ermöglichen eine genaue Temperaturführung sowohl zur Steuerung des durch Wärmestrahlung übertragenen Wärmeanteils wie auch des durch Konvektion in das Folienmaterial beim Siegeln der Kante eingebrachten Wärmeanteils.

In Zuführeinrichtung des Folienmaterials dem Block 10 nachgeordnet befindet sich eine Kühleinrichtung 17 mit einer Lochleiste 18, die sich im wesentlichen in Verlängerung der Luftverteilungsöffnungen 12 befindet und ebenfalls mit einer Vielzahl von untereinander und versetzt zueinander ausgesparten Kühlluftöffnungen 19 versehen ist, die mit einem Kühlluftzugfuhrkanal 20 kommunizieren, welcher üblicherweise mit der gleichen Druckluftquelle verbunden ist wie das Zuleitungssystem 14. Die Lochleiste 18 ist gegenüber der foliennahen Oberfläche 11 des Blockes 12 ein wenig nach hinten versetzt vorgesehen.

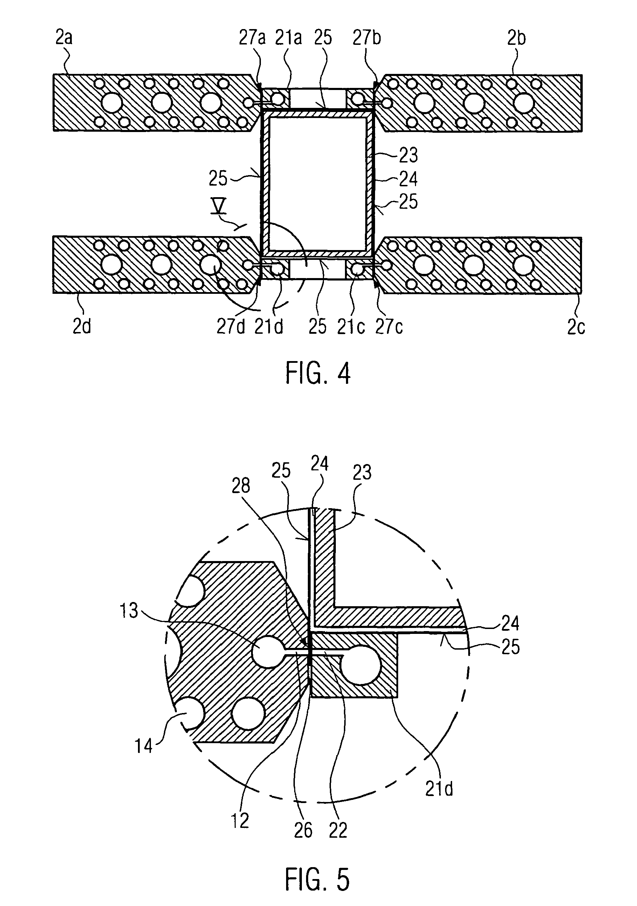

Wesentlich einfacher sind die den jeweiligen Backen 2 und in den Figuren 4 und 5 dargestellten Gegenhalter 21 ausgebildet. Diese haben keine Heizpatronen, sondern lediglich Luftaustrittsöffnungen 22 entsprechend den Luftaustrittsöffnungen 2 des Blocks 10. Die Luftaustrittsöffnungen 22 aller Gegenhalter 21 kommunizieren mit einem zentralen Wärmetauscher, welcher die aus den Gegenhaltern 21 austretende Luft auf die notwendige Temperatur bringt.

In Fig. 4 ist in der Schnittansicht ferner ein Füllrohr 23 gezeigt, welches von dem umfänglich geschlossenen Folienschlauch 24 umgeben ist. Wie zu erkennen, ragt von den Seitenwänden 25 des Folienschlauches 24 ein doppellagiger Zipfel 26 hervor. An jeder der Kanten 27 des rechteckigen Füllrohres 23 und damit des rechteckigen Folienschlauches 24 befindet sich ein solcher Zipfel 26. Die Zipfel 26 sind in einem Spalt 28 geführt, der zwischen der jeweiligen Backe 2a-2d und dem zugeordneten Gegenhalter 21 a-21 d gebildet ist. Die Gegenhalter 21 sind wie das Füllrohr 23 direkt an einem gemeinsamen Maschinengestell befestigt.

Zum Siegeln der Kanten 27 wird zunächst das Kantensiegelungsmodul 1 mit den Handrädern 7, 8 bzw. 9 auf das gewünschte Schlauchbeutelformat eingestellt. Hierzu können die einzelnen Backen 2 a-d mit ihren entsprechenden Querträgern 3 auf den Folienschlauch 24 zugestellt werden. Nach Einrichten des Kantensiegelungsmoduls 1 wird die Vorrichtung zum Herstellen des Schlauchbeutels angefahren. Zeitgleich werden die beiden Querträger 3 aufeinander zugefahren, so dass die mehrlagigen Zipfel 26 in dem Spalt 28, der zwischen der Backe 2 und dem zugeordneten Gegenhalter 21 gebildet ist, hindurchlaufen. Beim Zuführen der Querträger 3 aufeinander zu wird ferner die Luftzufuhr zu dem Gegenhalter 21 und den Backen 2 sowie der Kühleinrichtung 17 zugeschaltet. Die Zipfel 26 werden hierdurch zwischen einem beiderseits der Zipfel 26 in dem Spalt 28 ausgebildeten Luftkissen zusammengedrückt. Gleichzeitig erfolgt eine Erwärmung der Zipfel 26 durch Wärmestrahlung und Konvektion.

Die über die Lauflänge des Folienmaterials entlang der foliennahen Oberfläche 1 eingebrachte Wärmemenge ist so bestimmt, dass das Folienmaterial im Bereich der Zipfel hinreichend aufschmilzt, so dass die beiden Lagen des Folienmaterials miteinander verschweißt werden. Diese Verschweißung erfolgt berührungsfrei allein über die zugeführte Luft und aufgrund des Luftdrucks des Luftkissens, welche die Folienlagen gegeneinander drückt. Dementsprechend wird eine Festkörperreibung zwischen der Folie und dem Kantensiegelungsmodul 1 verhindert. Die Folie läuft reibungsfrei durch das Kantensiegelungsmodul 1 hindurch. Nach erfolgter Verschweißung wird die Schweißnaht rasch durch die zugeordnete Kühleinrichtung 17 gekühlt. Am Ende des Kantensiegelungsmoduls 1 hat die Kantenverschweißung eine hinreichende Festigkeit, so dass die beiden Lagen der gesiegelten Kante 27 fest miteinander verbunden sind.

Es sollte noch darauf hingewiesen werden, dass die beiden Heizpatronen 15.2 und 15.3 permanent zugeschaltet sind und den Block auf Temperatur halten, auch wenn dieser sich in der Ruhestellung befindet. Beim Zustellen der Querträger 3 aufeinander zu wird auch die foliennahe Heizpatrone 15.1 zugeschaltet. Da gleichzeitig auch die Luftzufuhr zugeschaltet wird, wird verhindert, dass unnötig Wärmeenergie beim Einstellen bzw. beim einem Störungszustand der Maschine, bei dem sich die Querträger 3 in der Ruhestellung befinden, abgegeben wird. Des weiteren wird eine übermäßige Erwärmung in der Umgebung des zu einem Schlauchbeutel zu verarbeitenden Folienmaterials vermieden. Die erfindungsgemäße Vorrichtung kann dementsprechend energiesparend eingesetzt werden. Des weiteren wird ganz gezielt lediglich die Kante erwärmt und eine darüber hinausgehende Erwärmung des gesamten Aufstellungsbereichs der Vorrichtung zum Herstellen der Schlauchbeutel vermieden.

Dem Kantensiegelungsmodul 1 nachgeordnet sind eine Querschweißeinrichtung zum Abschweißen des Folienschlauchs, um beispielsweise einen Klotzboden an dem Folienbeutel herzustellen.

Die vorliegende Erfindung ist nicht auf das gezeigt Ausführungsbeispiels beschränkt. So können andere Buntmetalllegierungen zur Herstellung des Blockes 10 verwendet werden. Es hat sich aber gezeigt, dass eine Legierung verwendet werden sollte, die auch bei den relativ geringen Temperaturen einen hinreichenden Wärmeanteil über Wärmestrahlung an das Folienmaterial überträgt.

### Bezugszeichenliste

- 1: Kantensiegelungsmodul
- 2: Backen
- 3: Querträger
- 4: Halteplatte
- 5: Langlöcher
- 6: Augen
- 7: Handrad, Abstandseinstellung für die Backen 2c, 2d
- 8: Handrad, Abstandseinstellung für die Backen 2a, 2b
- 9: Handrad für die Höheneinstellung der Backen 2
- 10: Block
- 11: foliennahe Oberfläche
- 12: Luftaustrittsöffnung
- 13: Luftverteiler
- 14: Zuleitungssystem
- 14.1 bis 14.13: Querleitungskanäle
- 15: Heizpatrone
- 15.1: foliennahe Heizpatrone
- 15.2: folienferne Heizpatrone
- 15.3: folienferne Heizpatrone
- 16: Thermofühler
- 16.1: foliennaher Thermofühler
- 16.2: folienferner Thermofühler
- 17: Kühleinrichtung
- 18: Lochleiste
- 19: Kühlluftöffnung
- 20: Kühlluftzufuhrkanal
- 21: Gegenhalter
- 22: Luftaustrittsöffnung Gegenhalter
- 23: Füllrohr
- 24: Folienschlauch
- 25: Seitenwand
- 26: Zipfel
- 27: Kante
- 28: Spalt
- 30: pneumatischer Zylinder

## Patentansprüche

1. Verfahren zum Herstellen eines Schlauchbeutels, bei dem eine Folienbahn umgelegt und die umgelegte Folienbahn durch eine Längssiegeleinrichtung zu einem Folienschlauch (24) gesiegelt wird, dessen Folienmaterial im Bereich der Kanten (27) des herzustellenden Schlauchbeutels gespreizt und mehrlagig gegeneinander gelegt und gesiegelt wird,
**dadurch gekennzeichnet,**
**dass** das Folienmaterial beim Siegeln der Kanten (27) bewegt wird.

2. Verfahren nach Anspruch 1, **dadurch gekennzeichnet, dass** die Lagen des Folienmaterials (26) beim Siegeln der Kanten (27) berührungsfrei gegeneinander gedrückt werden.

3. Verfahren nach Anspruch 1 oder 2, **dadurch gekennzeichnet, dass** das Folienmaterial beim Siegeln einer Kante (27) durch einen Spalt (28) zwischen gegenüberliegenden Backen (2, 21) geführt und über ein Gaskissen von den Backen (2) beabstandet wird.

4. Verfahren nach Anspruch 3, **dadurch gekennzeichnet, dass** das Gaskissen durch erwärmtes Gas gebildet wird.

5. Verfahren nach Anspruch 3 oder 4, **dadurch gekennzeichnet, dass** die Spaltbreite beim Betrieb selbstständig eingeregelt wird.

6. Verfahren nach Anspruch 5, **dadurch gekennzeichnet, dass** die Spaltbreite aufgrund eines Kräftegleichgewichtes zwischen der auf die Folien wirkenden Druckkraft und einer durch einen pneumatischen Zylinder ausgeübten Anpresskraft selbstständig eingeregelt wird.

7. Verfahren nach einem der vorherigen Ansprüche, **dadurch gekennzeichnet, dass** das Folienmaterial zum Siegeln einer Kante (27) durch Wärmestrahlung und Konvektion derart erwärmt wird, dass die Lagen des Folienmaterials (26) miteinander verschweißt werden.

8. Verfahren nach Anspruch 7, **dadurch gekennzeichnet, dass** der durch Wärmestrahlung eingebrachte Wärmeanteil bei zwischen 30% und 70% liegt.

9. Verfahren nach einem der vorherigen Ansprüche, **dadurch gekennzeichnet, dass** das Folienmaterial konvektiv durch Luft erwärmt wird, welche durch in der Backe (2) ausgebildete Kanäle (14.1 bis 14.13) geführt wird, dass ein foliennaher Backenbereich (11) separat zu einem tiefer liegenden Backenbereich (11) temperiert wird und dass der foliennahe Backenbereich in einer Ruhestellung, in der die Backe (2) von dem Folienmaterial beabstandet ist, nicht beheizt wird.

10. Verfahren nach Anspruch 9, **dadurch gekennzeichnet, dass** die Backen (2) automatisch in die Ruhestellung verfahren werden, wenn ein Stillstand des Folienmaterials im Bereich der Backen (2) detektiert wird.

11. Verfahren nach einem der vorherigen Ansprüche, **dadurch gekennzeichnet, dass** die Zufuhr von Gas automatisch abgestellt wird, wenn ein Stillstand des Folienmaterials im Bereich der Backen (2) detektiert wird.

12. Verfahren nach einem der vorherigen Ansprüche, **dadurch gekennzeichnet, dass** das Folienmaterial im Bereich jeweils einer Kante (27) zwischen einer der Backen (2) und einem Gegenhalter (21) geführt wird, der das Folienmaterial mit einem warmen Gas beaufschlagt, dessen Temperatur unter der Siegeltemperatur des Folienmaterials liegt.

13. Vorrichtung zum Herstellen von Schlauchbeuteln mit einer Formschulter zum Umlegen einer Folienbahn, einer Längssiegeleinrichtung zum Herstellen eines Folienschlauches (24) aus der umgelegten Folienbahn, einem von dem Folienschlauch (24) umgebenden Füllrohr (23), einer Quersiegeleinrichtung zur Erzeugung eines Schlauchbeutels mit wenigstens einer Quernaht, einer Trenneinrichtung zum Trennen des Folienmaterials im Bereich der Quernaht, mit Spreizelementen zum Spreizen der Kanten des Folienschlauches (24), mit Andrückmitteln zum Anlegen des im Bereich der gespreizten Kanten (27) mehrlagig liegenden Folienmaterials (26) sowie einer Kantensiegeleinrichtung (1) zum Siegeln des mehrlagigen Folienmaterials,
**dadurch gekennzeichnet,**
**dass** die Andrückmittel (2, 21) das Folienmaterial berührungsfrei gegeneinander drücken.

14. Vorrichtung nach Anspruch 13, **dadurch gekennzeichnet, dass** die Andrückmittel (2, 21) Gasaustrittsdüsen (12, 22) aufweisen, die derart in Bezug auf die Kanten ausgerichtet sind, dass aus den Gasaustrittsöffnungen (12, 22) austretendes Gas ein die Lagen des Folienmaterials (26) im Bereich der Kanten (27) beidseitig gegeneinander drückendes Luftkissen bildet.

15. Vorrichtung nach Anspruch 13 oder 14, **dadurch gekennzeichnet, dass** die Gasaustrittsöffnungen (12) und die zu den Gasaustrittsöffnungen (12) führenden Kanäle (14.1 bis 14.13) temperiert sind.

16. Vorrichtung nach einem der Ansprüche 13 bis 15, **gekennzeichnet durch** zwei zu jeder Kante einander gegenüberliegende und mit Luftaustrittsöffnungen (12, 22) versehene Backen (2, 21), die relativ zueinander verfahrbar sind.

17. Vorrichtung nach einem der Ansprüche 13 bis 16, **dadurch gekennzeichnet, dass** von den einander gegenüber liegenden Luftaustrittsöffnungen (12, 22) ein Satz von Luftaustrittsöffnungen (12) an einer Backe (2) vorgesehen ist, die zu den Gasaustrittsöffnungen (12) führende mäandrierende Kanäle (14.1 bis 14.13) aufweist und von wenigstens zwei Heizelementen (15.1; 15.2; 15.3) mit jeweils einem zugeordneten Regelkreis durchsetzt ist.

18. Vorrichtung nach Anspruch 17, **dadurch gekennzeichnet, dass** jedenfalls das den Gasaustrittsöffnungen (12) nahe Heizelement (15.1) derart geregelt ist, dass dieses Heizelement (15.1) aufgrund eines Signals aktiviert wird, welches das Zusammenfahren der zugeordneten Backen (2, 21) repräsentiert.

19. Vorrichtung nach einem der Ansprüche 13 bis 18, **dadurch gekennzeichnet, dass** jeweils einer Backe (2) gegenüberliegend ein Gegenhalter (21) vorgesehen ist, der Gasauslassdüsen (22) aufweist, und dass zur Temperierung der aus den Gasauslassdüsen sämtlicher Gegenhalter (21) ausgeblasenen Luft lediglich ein zentraler Wärmetauscher vorgesehen ist.

20. Vorrichtung nach einem der Ansprüche 13 bis 19, **dadurch gekennzeichnet, dass** jedenfalls der die Gasauslassöffnungen (12) aufweisende Bereich der Backen (2) aus einer Kupfer-Chrom-Zirkon-Legierung gebildet ist.

21. Vorrichtung nach einem der Ansprüche 13 bis 20, **gekennzeichnet durch** eine in Förderrichtung des Folienmaterials der Kantensiegeleinrichtung (1) nachgeordnete Kühleinrichtung (17) mit einander gegenüber liegenden Luftaustrittsöffnungen (19) zu jeder Kante.

22. Vorrichtung nach einem der Ansprüche 13 bis 21, **dadurch gekennzeichnet, dass** wenigstens eine der je Kante (27) paarweise vorgesehenen Backen (2) über einen pneumatischen Zylinder (30) verfahrbar ist und dass diese Backe (2) beim Betrieb in einer Betriebsstellung gehalten wird, die sich aus dem Gleichgewicht der auf Seiten der Backe (2) gegen das Folienmaterial resultierenden Druckkraft und der in dem pneumatischen Zylinder wirkenden Druckkraft ergibt.

23. Vorrichtung nach einem der Ansprüche 13 bis 22, **dadurch gekennzeichnet, dass** die Breite des sich zwischen zwei einander gegenüber liegenden Backen (2, 21) ergebenden Spaltes (28) beim Betrieb dem ein- bis dreifachen der Stärke des im Bereich der Kante (27) mehrlagig liegenden Folienmaterials (26) entspricht.

## Claims

1. Process for manufacturing a tubular bag, in which a web of film is folded over and the folded-over web of film is sealed by a longitudinal sealing apparatus to form a tube of film (24), whose film material is spread apart in the region of the edges (27) of the tubular bag to be manufactured and is laid in a number of plies, one against another, and sealed,
**characterised in that**
the film material is moved during the sealing of the edges (27).

2. Process according to claim 1,
**characterised in that** the plies of the film material (26) are pressed towards one another in a contact-less manner during the sealing of the edges (27).

3. Process according to claim 1 or 2,
**characterised in that** the film material is guided, during the sealing of an edge (27), through a gap (28) between opposed cheeks (2, 21) and is spaced apart from said cheeks (2) via a cushion of gas.

4. Process according to claim 3,
**characterised in that** the cushion of gas is constituted by heated gas.

5. Process according to claim 3 or 4,
**characterised in that** the width of the gap is adjusted automatically during the operation.

6. Process according to claim 5,
**characterised in that** the width of the gap is adjusted automatically as a result of an equilibrium of forces between the pressing force acting upon the films and a pressing-on force exerted by a pneumatic cylinder.

7. Process according to one of the preceding claims,
**characterised in that**, for the purpose of sealing an edge (27), the film material is heated by thermal radiation and convection in such a way that the plies of said film material (26) are welded to one another.

8. Process according to claim 7,
**characterised in that** the share of the heat produced by thermal radiation lies between 30% and 70%.

9. Process according to one of the preceding claims,
**characterised in that** the film material is heated convectively by air which is guided through ducts (14.1 to 14.13) constructed in the cheek (2), that a region (11) of the cheek close to the film is tempered separately to form a region (11) of the cheek which is located lower down, and that that region of the cheek which is close to the film is not heated when in an inoperative position in which said cheek (2) is spaced apart from the film material.

10. Process according to claim 9,
**characterised in that** the cheeks (2) are automatically moved into the inoperative position when it is detected that the film material is at a standstill in the region of said cheeks (2).

11. Process according to one of the preceding claims,
**characterised in that** the infeed of gas is automatically stopped when it is detected that the film material is at a standstill in the region of the cheeks (2).

12. Process according to one of the preceding claims,
**characterised in that**, in the region of one edge (27) in each case, the film material is guided between one of the cheeks (2) and a counter-holder (21) which acts upon said film material with a warm gas whose temperature lies below the sealing temperature of the film material.

13. Device for manufacturing tubular bags, said device having a forming shoulder for folding over a web of film, a longitudinal sealing apparatus for manufacturing a tube of film (24) out of the folded-over web of film, a filling pipe (23) which is surrounded by the tube of film (24), a transverse sealing apparatus for producing a tubular bag with at least one transverse seam, a separating apparatus for separating the film material in the region of said transverse seam, having spreading elements for spreading the edges of the tube of film (24) apart, having pressing-on means for laying-on the film material (26) which is located in a number of plies in the region of the spread-apart edges (27), and also an edge-sealing apparatus (1) for sealing the multiple-ply film material,
**characterised in that**
the pressing-on means (2, 21) press the film material towards one another in a contact-less manner.

14. Device according to claim 13,
**characterised in that** the pressing-on means (2, 21) have gas outlet nozzles (12, 22) which are oriented in such a way, with respect to the edges, that gas passing out of said gas outlet apertures (12, 22) forms a cushion of air that presses the plies of the film material (26) towards one another on both sides in the region of the edges (27).

15. Device according to claim 13 or 14,
**characterised in that** the gas outlet apertures (12) and the ducts (14.1 to 14.13) leading to said gas outlet apertures (12) are tempered.

16. Device according to one of claims 13 to 15,
**characterised by** two cheeks (2, 21) which lie opposite one another at each edge and are provided with air outlet apertures (12, 22) and which can be moved relative to one another.

17. Device according to one of claims 13 to 16,
**characterised in that,** of the air outlet apertures (12, 22) that lie opposite one another, one set of air outlet apertures (12) is provided on a cheek (2) which has meandering ducts (14.1 to 14.13) leading to the gas outlet apertures (12) and which has, passing through it, at least two heating elements (15.1; 15.2; 15.3) each having an associated regulating circuit.

18. Device according to claim 17,
**characterised in that** at any rate the heating element (15.1) which is close to the gas outlet apertures (12) is regulated in such a way that the said heating element (15.1) is activated as a result of a signal which represents the moving-together of the associated cheeks (2, 21).

19. Device according to one of claims 13 to 18,
**characterised in that** there is provided, lying opposite a cheek (2) in each case, a counter-holder (21) which has gas outlet nozzles (22), and that only one central heat-exchanger is provided for the purpose of tempering the air blown out of the gas outlet nozzles of all the counter-holders (21).

20. Device according to one of claims 13 to 19,
**characterised in that** at any rate that region of the cheeks (2) which has the gas outlet apertures (12) is formed from a copper/chromium/zirconium alloy.

21. Device according to one of claims 13 to 20,
**characterised by** a cooling apparatus (17) which is disposed downstream of the edge-sealing apparatus (1) in the direction of conveyance of the film material and has air outlet apertures (19) which lie opposite one another at each edge.

22. Device according to one of claims 13 to 21,
**characterised in that** at least one of the cheeks (2) which are provided in pairs in the case of each edge (27) can be moved via a pneumatic cylinder (30), and that the said cheek (2) is held, during operation, in an operating position which results from the equilibrium of the pressing force resulting on sides of the cheek (2) towards the film material and the pressing force acting within the pneumatic cylinder.

23. Device according to one of claims 13 to 22,
**characterised in that** the width of the gap (28) arising between two mutually opposed cheeks (2, 21) corresponds, during operation, to one to three times the thickness of the film material (26) which is located in a number of layers in the region of the edge (27).

## Revendications

1. Procédé de fabrication d'un sachet tubulaire, dans lequel un ruban de feuille est replié et le ruban de feuille replié est scellé par un dispositif de scellement longitudinal en un tube de feuille (24) dont le matériau en feuille est écarté dans la zone des arêtes (27) du sachet tubulaire à fabriquer et posé et scellé en plusieurs couches l'une contre l'autre,
**caractérisé par le fait que**
le matériau en feuille est déplacé lors du scellement des arêtes (27).

2. Procédé selon la revendication 1, **caractérisé par le fait que** les couches du matériau en feuille (26) sont poussées sans contact l'une contre l'autre lors du scellement des arêtes (27).

3. Procédé selon la revendication 1 ou 2, **caractérisé par le fait que** le matériau en feuille est guidé lors du scellement d'une arête (27) à travers une fente (28) entre des mâchoires opposées (2, 21) et est tenu à distance des mâchoires (2) par l'intermédiaire d'un coussin de gaz.

4. Procédé selon la revendication 3, **caractérisé par le fait que** le coussin de gaz est formé par du gaz chauffé.

5. Procédé selon la revendication 3 ou 4, **caractérisé par le fait que** la largeur de fente est réglée automatiquement lors du fonctionnement.

6. Procédé selon la revendication 5, **caractérisé par le fait que** la largeur de fente est réglée automatiquement sur la base d'un équilibre des forces entre la force de pression agissant sur les feuilles et une force de poussée exercée par un cylindre pneumatique.

7. Procédé selon l'une des revendications précédentes, **caractérisé par le fait que**, pour le scellement d'une arête (27), le matériau en feuille est chauffé par rayonnement thermique et par convection de telle sorte que les couches du matériau en feuille (26) sont soudées ensemble.

8. Procédé selon la revendication 7, **caractérisé par le fait que** la proportion de chaleur apportée par rayonnement thermique est comprise entre 30 % et 70 %.

9. Procédé selon l'une des revendications précédentes, **caractérisé par le fait que** le matériau en feuille est chauffé par convection par de l'air qui est guidé dans des canaux (14.1 à 14.13) prévus dans la mâchoire (2), qu'une zone de mâchoire (11) proche de la feuille est tempérée séparément d'une zone de mâchoire (11) située plus profondément, et que la zone de mâchoire proche de la feuille n'est pas chauffée dans une position de repos dans laquelle la mâchoire (2) est tenue à distance du matériau en feuille.

10. Procédé selon la revendication 9, **caractérisé par le fait que** les mâchoires (2) sont déplacées automatiquement dans la position de repos lorsqu'une immobilisation du matériau en feuille est détectée dans la zone de la mâchoire (2).

11. Procédé selon l'une des revendications précédentes, **caractérisé par le fait que** l'amenée de gaz est arrêtée automatiquement lorsqu'une immobilisation du matériau en feuille est détectée dans la zone de la mâchoire (2).

12. Procédé selon l'une des revendications précédentes, **caractérisé par le fait que** le matériau en feuille dans la zone d'une arête respective (27) est guidé entre l'une des mâchoires (2) et un appui complémentaire (21) qui soumet le matériau en feuille à un gaz chaud dont la température est inférieure à la température de scellement du matériau en feuille.

13. Dispositif pour la fabrication de sachets tubulaires avec un épaulement formé pour le repliement d'un ruban de feuille, comprenant un dispositif de scellement longitudinal pour la fabrication d'un tube de feuille (24) à partir du ruban de feuille replié, avec un tuyau de remplissage (23) entouré par le tube de feuille (24), un dispositif de scellement transversal pour la production d'un sachet tubulaire comportant au moins une soudure transversale, un dispositif de séparation pour la séparation du matériau en feuille dans la zone de la soudure transversale, des éléments d'écartement pour l'écartement des arêtes du tube de feuille (24), des moyens de poussée pour pousser contre le matériau en feuille (26) en plusieurs couches dans la zone des arêtes écartées (27) et un dispositif de scellement d'arête (1) pour sceller le matériau en feuille à plusieurs couches,
**caractérisé par le fait que**
les moyens de poussée (2, 21) appuient sans le toucher sur le matériau en feuille à plusieurs couches ainsi poussées l'une contre l'autre.

14. Dispositif selon la revendication 13, **caractérisé par le fait que** les moyens de poussée (2, 21) comportent des buses de sortie de gaz (12, 22) qui sont orientées de telle sorte par rapport aux arêtes que du gaz sortant des orifices de sortie de gaz (12, 22) forme un coussin d'air poussant des deux côtés l'une contre l'autre les couches du matériau en feuille (26) dans la zone des arêtes (27).

15. Dispositif selon la revendication 13 ou 14, **caractérisé par le fait que** les orifices de sortie de gaz (12) et les canaux (14.1 à 14.13) conduisant aux orifices de sortie de gaz (12) sont tempérés.

16. Dispositif selon l'une des revendications 13 à 15, **caractérisé par** deux mâchoires (2, 21) opposées l'une à l'autre par rapport à chaque arête, munies d'orifices de sortie d'air (12, 22) et déplaçables l'une par rapport à l'autre.

17. Dispositif selon l'une des revendications 13 à 16, **caractérisé par le fait que**, parmi les orifices de sortie de gaz (12, 22) opposés les uns aux autres, il est prévu un ensemble d'orifices de sortie de gaz (12) sur une mâchoire (2) qui comporte des canaux (14.1 à 14.13) faisant des méandres pour aller jusqu'aux orifices de sortie de gaz (12) et qui est traversée par au moins deux éléments de chauffage (15.1 ; 15.2 ; 15.3) ayant chacun un circuit de régulation associé.

18. Dispositif selon la revendication 17, **caractérisé par le fait que,** en tout cas, l'élément de chauffage (15.1) proche des orifices de sortie de gaz (12) est régulé de telle sorte que cet élément de chauffage (15.1) est activé en fonction d'un signal qui représente le rapprochement des mâchoires associées (2, 21).

19. Dispositif selon l'une des revendications 13 à 18, **caractérisé par le fait qu**'il est prévu à chaque fois en face d'une mâchoire (2) un appui complémentaire (21) qui comporte des buses de sortie de gaz (22) et que, pour tempérer l'air soufflé des buses de sortie d'air de l'ensemble des appuis complémentaires (21), il est simplement prévu un échangeur de chaleur central.

20. Dispositif selon l'une des revendications 13 à 19, **caractérisé par le fait que**, la zone de la mâchoire (2) qui comporte les orifices de sortie de gaz (12) est en un alliage cuivre - chrome - zirconium.

21. Dispositif selon l'une des revendications 13 à 20, **caractérisé par** un dispositif de refroidissement (17) placé en aval du dispositif de scellement d'arête (1) dans la direction de transport du matériau en feuille et comportant des orifices de sortie d'air (19) opposés pour chaque arête.

22. Dispositif selon l'une des revendications 13 à 21, **caractérisé par le fait que** au moins l'une des mâchoires (2) prévues par paire pour chaque arête (27) est déplaçable par l'intermédiaire d'un cylindre pneumatique (30) et que cette mâchoire (2) est maintenue lors du fonctionnement dans une position de fonctionnement qui résulte de l'équilibre de la force de pression résultant contre le matériau en feuille du côté de la mâchoire (2) et de la force de pression agissant dans le cylindre pneumatique.

23. Dispositif selon l'une des revendications 13 à 22, **caractérisé par le fait que** la largeur de la fente (28) résultant entre deux mâchoires (2, 21) opposées correspond lors du fonctionnement à une à trois fois l'épaisseur du matériau en feuille (26) se trouvant en plusieurs couches dans la zone de l'arête (27).
